# EUROPEAN PATENT APPLICATION

(11) **EP 1 679 526 A1**
(43) Date of publication of application: **12.07.2006**
(21) Application number: 06000071.8
(22) Date of filing: 03.01.2006
(51) Int. Cl.: G01S 13/93, B62D 15/02, G08G 1/14

(54) **Parking support device for motor vehicles using neighboring object information acquisition device**

(30) Priority: 07.01.2005 JP 2005002967
(71) Applicant: Toyota Jidosha Kabushiki Kaisha, Toyota-shi, Aichi-ken, 471-8571 (JP)
(72) Inventor: Satonaka, Hisashi, Toyota-shi, Aichi-ken 471-8571 (JP); Okuda, Masato, Toyota-shi, Aichi-ken 471-8571 (JP); Yamaga, Takao, Toyota-shi, Aichi-ken 471-8571 (JP)
(74) Representative: Winter, Brandl, Fürniss, Hübner Röss, Kaiser, Polte Partnerschaft Patent- und Rechtsanwaltskanzlei

(57) **Abstract**

A neighboring object information acquisition device comprises a distance measuring unit measuring a quantity equivalent to a distance to a neighboring object in a predetermined direction. A storage unit stores a sequence of points indicating results of the measurement performed multiple times. An object detection unit detects existence of the object based on the sequence of points. An approximation unit outputs an approximation of the sequence of points by applying a curve or a straight line, so that an approximate curve or an approximate straight line is derived. An evaluation unit outputs a result of evaluation of a reliability of the sequence of points. A determination unit determines object information by selecting one of information derived from the sequence of points and information derived from the result of approximation in accordance with the result of evaluation.

## Description

### BACKGROUND OF THE INVENTION

### 1. Field of the Invention

The present invention relates to a neighboring object information acquisition device which acquires object information related to a neighboring object of a vehicle, and relates to a parking support device using the neighboring object information acquisition device.

### 2. Description of the Related Art

Conventionally, the technique in which a series of distance data (a sequence of points) from the vehicle concerned to a neighboring object detected by a corner sensor (distance measuring unit) is approximated with a straight line, and endpoints of the object are computed based on the approximated straight line is known. For example, see Japanese Laid-Open Patent Application No. 2002-120677.

However, in the case of a distance measuring unit which measures the distance using acoustic waves, such as the corner sensor, if a cause of noise, like the human being, exists in the neighborhood of the object being detected, a noise may be included in the result (the sequence of points) of detection by the distance measuring unit.

Moreover, if the detection range for the object being detected by the distance measuring unit is inadequate, the length of the sequence of points as the result of detection of the distance measuring unit may become inadequate.

In such cases, if the approximation of the sequence of points obtained as the result of detection of the distance measuring unit can be allowed with a curve or a straight line, a reliability of the approximate curve or approximated straight line becomes inadequate. Accordingly, the reliability of the object information (such as the endpoints of the object) derived or acquired based on the approximate curve or the approximate straight line may become inadequate.

### SUMMARY OF THE INVENTION

An object of the present invention is to provide an improved parking support device in which the above-mentioned problems are eliminated.

Another object of the present invention is to provide a neighboring object information acquisition device which is capable of acquiring the object information with adequately high reliability.

Another object of the present invention is to provide a parking support device using a neighboring object information acquisition device which is capable of acquiring the object information with adequately high reliability.

In order to achieve the above-mentioned objects, the present invention provides a neighboring object information acquisition device provided in an automotive vehicle to acquire object information of a neighboring object of the vehicle, the neighboring object information acquisition device comprising: a distance measuring unit measuring a quantity equivalent to a distance to the object in a predetermined direction; a storage unit storing a sequence of points indicating results of the measurement performed by the distance measuring unit multiple times; an object detection unit detecting existence of the object based on the sequence of points stored in the storage unit; an approximation unit outputting an approximation of the sequence of points stored in the storage unit by applying a curve or a straight line, so that an approximate curve or an approximate straight line is derived from the sequence of points; an evaluation unit outputting a result of evaluation of a reliability of the sequence of points; and a determination unit determining the object information by selecting one of information derived from the sequence of points and information derived from the approximate curve or the approximate straight line in accordance with the result of evaluation from the evaluation unit.

The above-mentioned neighboring object information acquisition device may be configured so that when the result of evaluation from the evaluation unit indicates that a length of the sequence of points is above a reference value, the determination unit determines the information derived from the approximate curve or the approximate straight line as being the object information of the object.

The above-mentioned neighboring object information acquisition device may be configured so that the result of evaluation is a degree of variation of a distance of the approximate curve or the approximate straight line to a predetermined standard curve, and when the degree of variation is above a predetermined reference value, the determination unit determines the information derived from the approximate curve or the approximate straight line as being the object information of the object.

The above-mentioned neighboring object information acquisition device may be configured so that, when both the approximate curve and the approximate straight line are derived by the approximation unit, the result of approximation of the sequence of points with a larger one of a fitness ratio is adopted as the approximation result from which the object information is generated.

The above-mentioned neighboring object information acquisition device may be configured so that the approximation part is configured to determine which of the approximate curve or the approximate straight line is selected to obtain the approximation result, in accordance with a bending angle between two straight lines one of which is formed by connecting one end of the sequence of points and a middle point of the sequence of points while the other of the two straight lines is formed by connecting the other end of the sequence of points and the middle point thereof.

The above-mentioned neighboring object information acquisition device may be configured so that the object information includes information related to endpoints of the object derived from the approximate curve or the approximate straight line.

In order to achieve the above-mentioned objects, the present invention provides a parking support device which supports parking of an automotive vehicle in which a neighboring object information acquisition device is provided, the neighboring object information acquisition device comprising: a distance measuring unit measuring a quantity equivalent to a distance to the object in a predetermined direction; a storage unit storing a sequence of points indicating results of the measurement performed by the distance measuring unit multiple times; an object detection unit detecting existence of the object based on the sequence of points stored in the storage unit; an approximation unit outputting an approximation of the sequence of points stored in the storage unit by applying a curve or a straight line, so that an approximate curve or an approximate straight line is derived from the sequence of points; an evaluation unit outputting a result of evaluation of a reliability of the sequence of points; and a determination unit determining object information by selecting one of information derived from the sequence of points and information derived from the approximate curve or the approximate straight line in accordance with the result of evaluation from the evaluation unit, wherein the parking support device determines a target parking position or a target parking direction which is a direction of the vehicle at the target parking position, based on the object information acquired by the neighboring object information acquisition device.

According to the neighboring object information acquisition device and the parking support device of the invention, the neighboring object information acquisition device can acquire the object information with high reliability, and the parking support device using the neighboring object information acquisition device can acquire the object information with high reliability.

### BRIEF DESCRIPTION OF THE DRAWINGS

Other objects, features and advantages of the present invention will become apparent from the following detailed description when read in conjunction with the accompanying drawings.

FIG. 1 is a block diagram showing the composition of a parking support device in an embodiment of the invention.

FIG. 2 is a diagram for explaining the detection mode of a neighboring object (e.g., a neighboring vehicle) being detected by a corner sensor.

FIG. 3 is a diagram for explaining a sequence of points concerning the neighboring vehicle obtained when the vehicle (self-vehicle) provided with the corner sensor goes by the neighboring vehicle of FIG. 2.

FIG. 4 is a block diagram showing the functional composition of a neighboring object information acquisition device of this embodiment.

FIG. 5 is a flowchart for explaining the main routine of the processing performed by the neighboring object information acquisition device of this embodiment.

FIG. 6 is a diagram for explaining the mode of correction of endpoints.

FIG. 7 is a diagram for explaining the influence of a noise.

FIG. 8 is a diagram showing an example of a touch panel for setting up a target parking position on a display.

FIG. 9 is a block diagram showing the function composition of a parking support ECU of this embodiment.

FIG. 10 is a flowchart for explaining the main routine of the processing performed by the parking support ECU of this embodiment.

FIG. 11A, FIG. 11B, and FIG. 11C are diagrams showing examples of the situation of an obstacle in the neighborhood of the vehicle in the process of reaching the parking start position during parallel parking.

FIG. 12 is a diagram for explaining the method of determining a target parking direction in the case of parallel parking.

FIG. 13 is a diagram for explaining the method of determining a target parking direction in the case of garage parking.

### DETAILED DESCRIPTION OF PREFERRED EMBODIMENTS

A description will now be provided of an embodiment of the present invention with reference to the accompanying drawings.

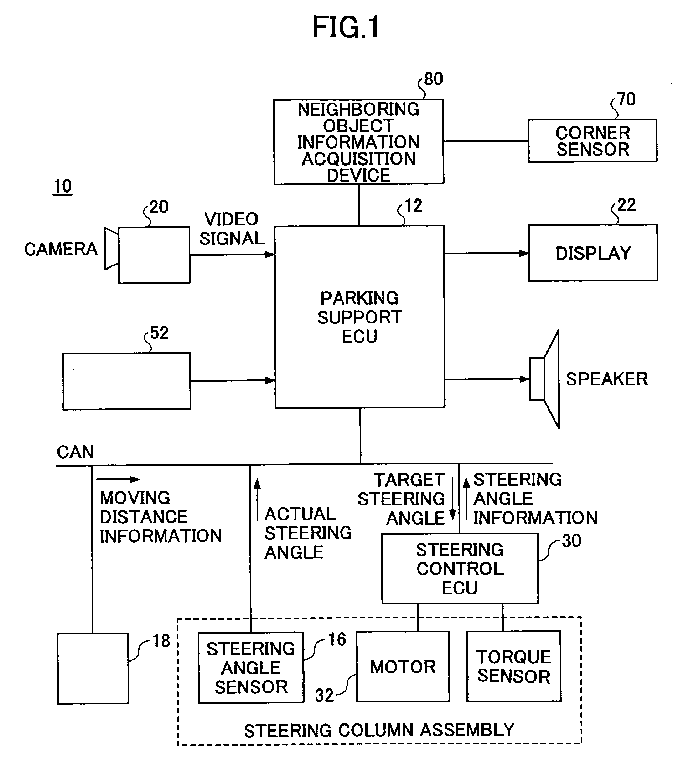

FIG. 1 is a block diagram showing the composition of a parking support device 10 in an embodiment of the invention.

As shown in FIG. 1, the parking support device 10 is mainly constituted by an electronic control unit 12 (which will be called the parking support ECU 12). The parking support ECU 12 is constituted by a microcomputer which comprises a CPU, a ROM, a RAM, etc. which are interconnected by a bus (which is not illustrated). In the ROM, the program which is executed by the CPU and data are stored.

A steering angle sensor 16 and a vehicle speed sensor 18 are connected to the parking support ECU 12 via a bus of the CAN (Controller Area Network) or an appropriate high-speed communication bus. The steering angle sensor 16 detects the steering angle of a steering wheel (not shown), and the vehicle speed sensor 18 detects the speed of the vehicle.

The vehicle speed sensor 18 may be a wheel speed sensor which is disposed on each of the vehicle wheels to generate a pulse signal with a period proportional to the wheel speed.

A neighboring object information acquisition device 80 is connected to the parking support ECU 12. The neighboring object information acquisition device 80 in this embodiment is constituted by a microcomputer. Alternatively, the neighboring object information acquisition device 80 may be embodied by implementing the neighboring object information acquisition device 80 into the parking support ECU 12.

A corner sensor (distance measuring unit) 70 which detects a distance from the vehicle to an obstacle using an acoustic wave (for example, ultrasonic wave), an electric wave (for example, millimeter wave), a light wave (for example, laser), etc. is connected to the neighboring object information acquisition device 80.

The corner sensor 70 may be a distance measuring unit which detects a distance, such as a stereo vision, besides a laser radar, a millimeter wave radar and an ultrasonic radar. The corner sensor 70 is disposed on each of the right and left sides of the vehicle front part.

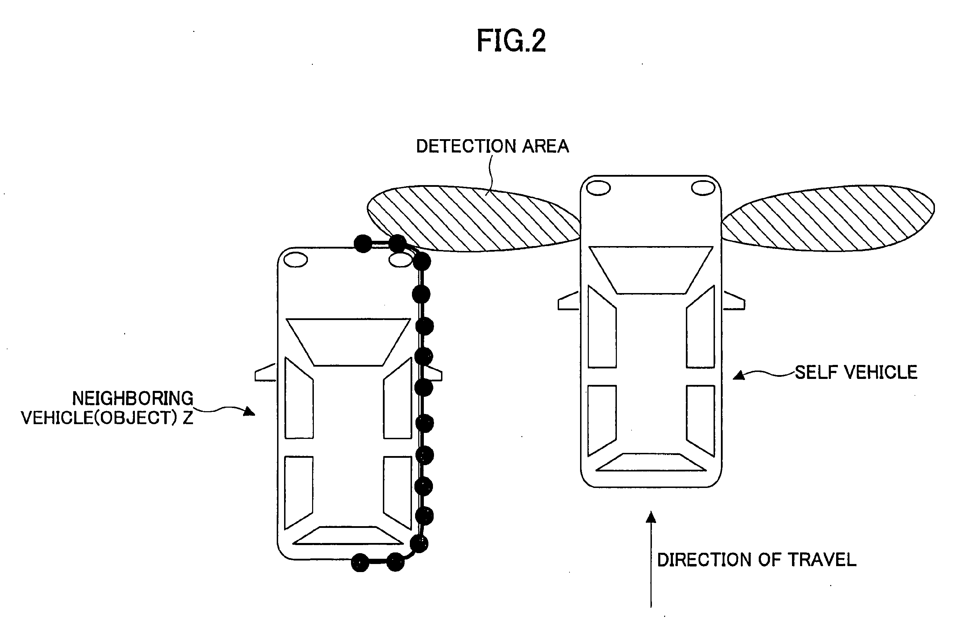

As shown in FIG. 2, the corner sensor 70 emits an acoustic wave or the like in the predetermined direction from the center of the vehicle width, and receives the reflected wave from the obstruct so that a distance from the vehicle to the obstacle on the vehicle side is detected.

The result of detection of the corner sensor 70 is stored into a predetermined memory 82 (for example, an EEPROM) of the neighboring object information acquisition device 80.

As shown in FIG. 2, the reflection points (which are indicated by the black dots in FIG. 2) of the acoustic wave emitted from the corner sensor 70 will move along the side of the neighboring vehicle Z with movement of the self vehicle.

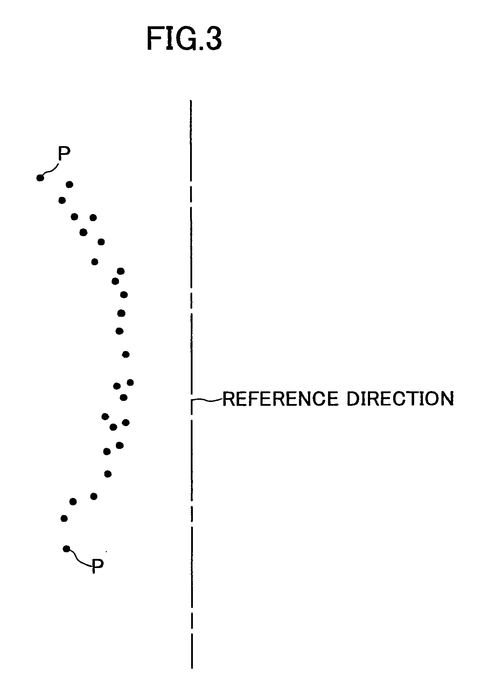

In this case, the corner sensor 70 outputs the point data indicating the reflection points (the set of the reflection points of the acoustic wave) of the obstacle as shown in FIG. 3 based on the received data, and the set of the point data (the sequence of points) is stored into the memory 82.

The neighboring object information acquisition device 80 acquires the object information of the object related to the sequence of points concerned based on the sequence of points stored in the memory 82.

The object information may include the information related to an approximate curve or an approximate straight line which provides approximation of the outside contour (outline) of the object, the endpoints of the object, and the direction to the object, which will be explained below.

Alternatively, the object information may further include the result of detection of the object, the position of the object, the size of the object, the kind of the object, etc., as general information.

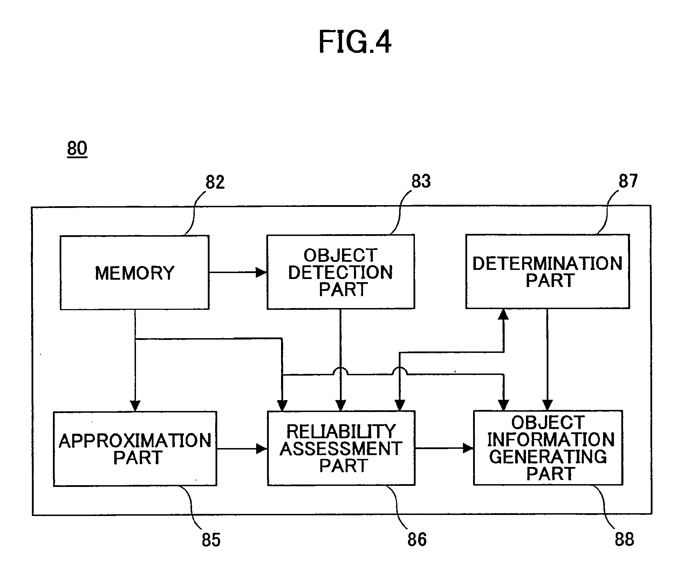

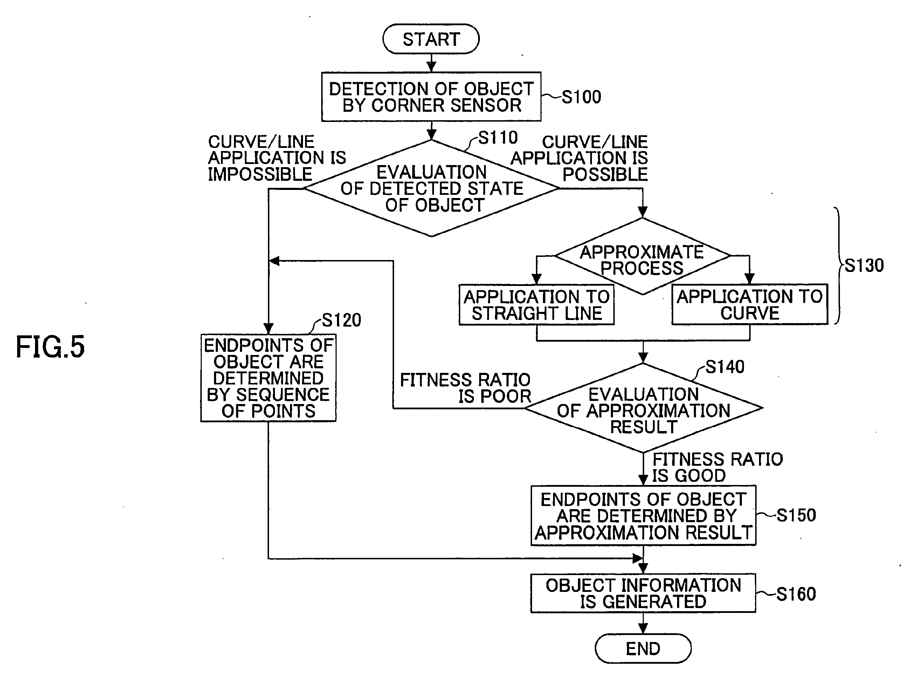

FIG. 4 is a block diagram showing the functional composition of the neighboring object information acquisition device 80 of this embodiment. FIG. 5 is a flowchart for explaining the main routine of the processing performed by the neighboring object information acquisition device 80 of this embodiment.

As shown in FIG. 4, the neighboring object information acquisition device 80 comprises the memory 82, an object detection part 83, an approximation part 85, a reliability assessment part 86, a determination part 87, and an object information generating part 88.

The object detection part 83 detects existence of the object being detected. The approximation part 85 outputs an approximation of the sequence of points stored in the memory 82, by applying a curve or a straight line, and derives an approximate curve or an approximate straight line.

The reliability assessment part 86 outputs a result of evaluation of a reliability of the sequence of points. The determination part 87 selectively determines either information derived from the sequence of points or information derived from the approximate curve or the approximate straight line as being the object information of the object concerned, in accordance with the result of evaluation output from the reliability assessment part 86. The object information generating part 88 generates the object information of the object concerned.

As shown in FIG. 5, the object detection part 83 detects existence of the object being detected, based on the result of detection of the corner sensor 70 (the sequence of points stored in the memory 82) (step S100).

At this time, a small number of point data which is isolated from the other point data may be disregarded as a noise. When it is determined that the detected state of the object is poor (for example, when the number of point data or the length of the sequence of points is not large enough), the processing of FIG. 5 may be terminated without generating the object information which will be explained below.

After the object being detected is detected, the reliability assessment part 86 evaluates the detected state of the object concerned based on the result of detection of the corner sensor 70 (or the sequence of points stored in the memory 82) (step S110).

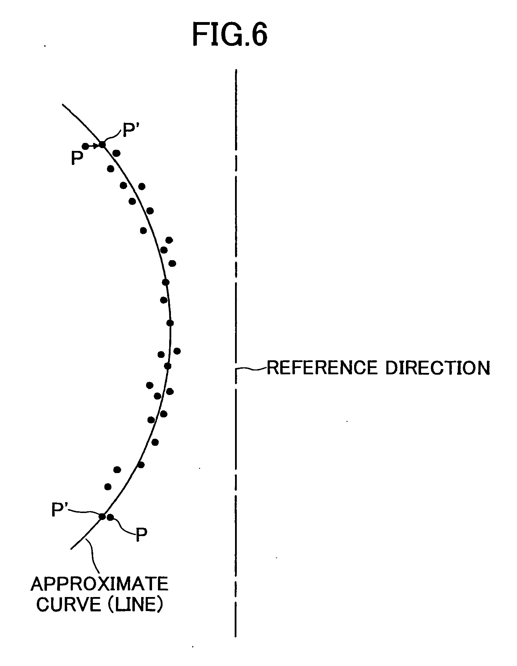

When the length of the sequence of points stored in the memory 82 is below a predetermined reference value, the object information generating part 88 determines the edges of the sequence of points concerned in the reference direction as being the endpoints P of the object as shown in FIG. 6 (step S120), and generates the object information (step S160). The reference direction in this case may be parallel to the normal parking direction in the case of parallel parking, or may be perpendicular to the normal parking direction in the case of garage parking.

On the other hand, when the length of the sequence of points stored in the memory 82 is above the predetermined reference value, the approximation part 85 outputs an approximation of the sequence of points stored in the memory 82 by applying a straight line or a curve (step S130).

Generally, the front part of the vehicle can be approximated with a secondary curve, and the side part of the vehicle can be approximated with a straight line or a secondary curve with a small curvature. For this reason, the approximation part 85 outputs an approximation of the sequence of points by applying selectively one of the secondary curve or the straight line or applying both the secondary curve and the straight line.

When both the approximate curve and the approximate straight line are derived by the approximation part 85, the result of approximation of the sequence of points with a larger one of a fitness ratio (which will be explained below) may be adopted as the approximation result from which the object information is generated by the object information generating part 88.

Alternatively, the approximation part 85 may determine which of an approximate curve or an approximate straight line is selected to obtain the approximation result by applying it, in accordance with a bending angle between two straight lines one of which is formed by connecting one end of the sequence of points and a middle point of the sequence of points while the other of the two straight lines is formed by connecting the other end of the sequence of points and the middle point thereof.

For example, the approximation part 85 determines that the approximation result is obtained by applying an approximate straight line, when the bending angle is larger than a predetermined angle which is near 180 degrees. On the other hand, when the bending angle is less than the predetermined angle, the approximation part 85 determines that the approximation result is obtained by applying an approximate curve.

When the approximate curve or the approximate straight line is computed at the step S130, the reliability assessment part 86 evaluates a reliability of the approximate curve or the approximate straight line, and determines whether the result of evaluation is in conformity with a predetermined requirement (step S140).

In this step S140, the reliability assessment part 86 computes a fitness ratio of the computed approximate curve or approximate straight line to a standard curve (or a plurality of standard curves) generalized based on the shapes of various vehicles.

The evaluation in this case is substantially equivalent to evaluating the degree of variation (an average error, a distribution degree) of the distance of the respective one of the points in the sequence of points from the standard curve.

When the fitness ratio is above a predetermined reference value (or when the fitness ratio is good), the determination part 87 determines endpoints of the object concerned based on the result of approximation (or the computed approximate curve or approximate straight line) (step S150). And the object information generating part 88 generates object information of the object concerned based on the result of approximation (or the computed approximate curve or approximate straight line) (step S160).

For example, in this step S160, the object information generating part 88 performs correction to move the point P at the edge of the sequence of points for approximation in the reference direction, as shown in FIG. 6, to the point P' on the approximate curve or the approximate straight line (the point P' is a projection of the point P on the approximate curve in the direction perpendicular to the reference direction). The point P' is considered as indicating the endpoint of the object being detected so that the object information is generated based on the result of the above correction.

In this respect, any of various correcting methods may be applicable if the applied method uses an approximate curve or an approximate straight line, and the present invention is not limited to the particular method of correction to the point P' as in the above correcting method.

It is preferred that, in the step S160, the object information generating part 88 generates the information related to the direction of the object as part of the object information. For example, when the object being detected is an automotive vehicle, it can be assumed that if the secondary curve is the approximation of the outline of the front part of the vehicle, the central axis of the secondary curve corresponds to the longitudinal axis of the vehicle, or the parking direction of the vehicle. Moreover, it can be assumed that if the straight line is the approximation of the outline of the side of the vehicle, or the direction of to the straight line or the line connecting the ends of the curve corresponds to the parking direction of the vehicle.

On the other hand, when the fitness ratio is less than the predetermined reference value (or when the fitness ratio is poor), the object information generating part 88 performs the above step S120 and the above step S160. That is, the object information generating part 88 determines the edges of the sequence of points concerned in the reference direction as being the endpoints P of the object (step S120), and generates the object information (step S160).

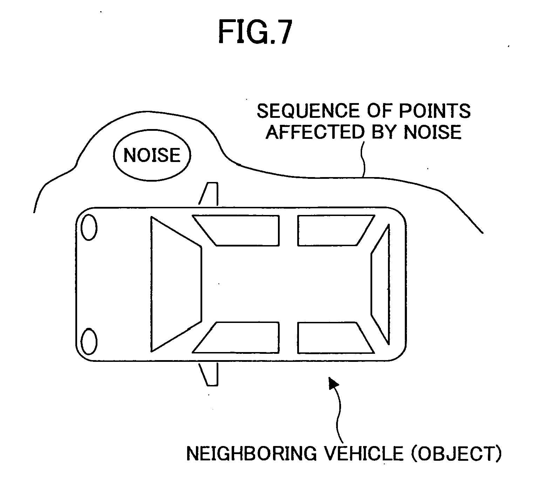

By the way, if a noise element, such as the human being, other than the object being detected, exists in the neighborhood of the vehicle, the approximate curve derived from the sequence of points may greatly deviate from the actual outline of the object being detected due to the influence of the noise element as shown in FIG. 7.

To avoid the problem, according to this embodiment, the fitness ratio of the approximate curve or the approximate straight line is estimated in the above-mentioned step S140, and it is possible to generate the object information of the object concerned by taking into consideration the error due to the influence of the noise element.

In the above-described embodiment, even when the fitness ratio is below the predetermined reference value, the object information related to the endpoints of the object is generated without using the approximate curve or the approximate straight line. Alternatively, the above-described embodiment may be modified not to generate the object information in such a case.

Even if there is no influence of a noise, there is a case in which the sequence of points is measured by the corner sensor 70 but the range of detection of the object is inadequate. Namely, there is a case in which the length of the sequence of points as the result of detection of the corner sensor 70 is inadequate.

In such a case, even if an approximation of the sequence of points concerned can be generated by applying a curve or a straight line, the reliability of the approximate curve or the approximate straight line becomes inadequate. As a result, the reliability of the object information (or the information related to the endpoints of the object) derived from the sequence of points, the approximate curve, or the approximate straight line may become inadequate.

To eliminate the problem, according to this embodiment, the length of the sequence of points is evaluated in the step S110, and the fitness ratio of the approximate curve or the approximate straight line is further evaluated in the step S140. It is possible for the present embodiment to prevent the object information from being generated based on the sequence of points, the approximate curve or the approximate straight line with inadequate reliability. Thus, according to the neighboring object information acquisition device 80 of this embodiment, the reliability of the result of detection (the sequence of points in the memory 82) of the corner sensor 70 can be evaluated appropriately, and, as a result, it is possible to acquire the object information with high reliability.

Such reliable object information is useful for various control procedures of the vehicle. In the following, some examples of the parking support device 10 in which the object information acquired by the neighboring object information acquisition device 80 is used when the parking support control is performed by the parking support ECU 12 will be explained.

In the parking support device 80 of FIG. 1, a reverse shift switch (not illustrated) and a parking switch 52 which are provided in the vehicle are connected to the parking support ECU 12.

The reverse shift switch outputs an ON signal when the gearbox lever is operated by the user to the reverse position, and otherwise the output signal of the reverse shift switch is maintained in OFF state. The parking switch 52 is disposed in the passenger compartment, and can be operated by the user. An output signal of the parking switch 52 is maintained in OFF state in the ordinary state of the parking switch 52, and turned into ON state when the parking switch 52 is operated by the user.

Based on the output signal of the parking switch 52, the parking support ECU 12 detects whether the user currently needs parking support control. For example, when the parking switch 52 is turned ON by the user during running of the vehicle, the parking support ECU 12 detects the ON state of the output signal of the parking switch 52, or the user's need for parking support control. And the parking support ECU 12 determines a target parking position appropriate for parking of the vehicle in the circumference of the vehicle, based on the result of a subsequent detection of the corner sensor 70 (namely, based on the object information obtained from the neighboring object information acquisition device 80).

The method of determination of a target parking position or a target parking direction will be described later.

If the parking switch 52 is turned ON and the reverse shift switch is turned ON, then the parking support ECU 12 prepares and starts the parking support control processing.

In the following, a vehicle position when the parking switch 52 is turned ON and the reverse shift switch is turned ON will be called a parking start position, for the sake of convenience of explanation.

As shown in FIG. 1, a back monitor camera 20 disposed at the central part of the vehicle rear bumper is connected to the input of the parking support ECU 12, and a display 22 disposed in the passenger compartment is connected to the output of the parking support ECU 12.

The back monitor camera 20 is an imaging unit, such as a CCD camera, which takes an image of the scenery of the back of the vehicle in the range of a predetermined angle and supplies a video signal indicating the taken image, to the parking support ECU 12.

The parking support ECU 12 displays the taken image (the actual image of the back scenery) of the back monitor camera 20 on the display 22, when both the reverse shift switch and the parking switch 52 are in.ON state.

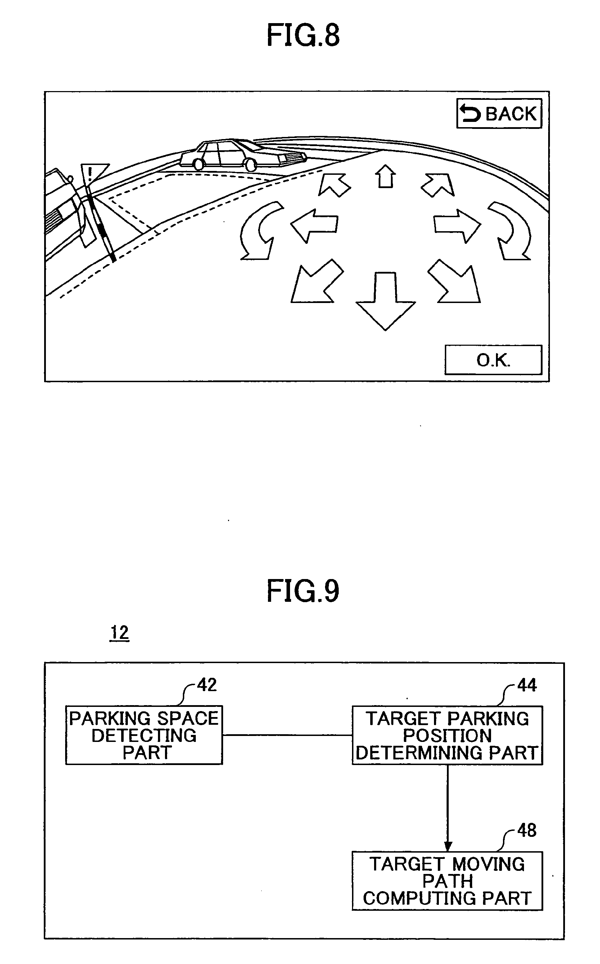

At this time, as shown in FIG. 8, the superposition indication of a target parking frame is given on the taken image in the garage parking screen on the display 22. The target parking frame may be displayed by a graphical indication imitating the outside of the vehicle or the actual parking frame, and it may be, for example, in the form that the position and direction of the target parking frame can be visually recognized by the user. And two kinds of target parking frame may be prepared: the indication for garage parking and the indication for parallel parking.

In this example, the initial display position and direction of the target parking frame displayed on the display 22 correspond to the target parking position and the target parking direction determined based on the object information obtained from the neighboring object information acquisition device 80 as described above.

The position and direction of this target parking frame (namely, the target parking position and the target parking direction) may be fixed without change by a depression of the final O.K. button by the user. Alternatively, as shown in FIG. 8, adjustment of the position of the target parking frame etc. may be enabled, before depression of the O.K. button, by depressing the touch panel buttons for carrying out translational movements of the target parking frame in the four directions of up, down, right and left, and a rotational movement of the target parking frame.

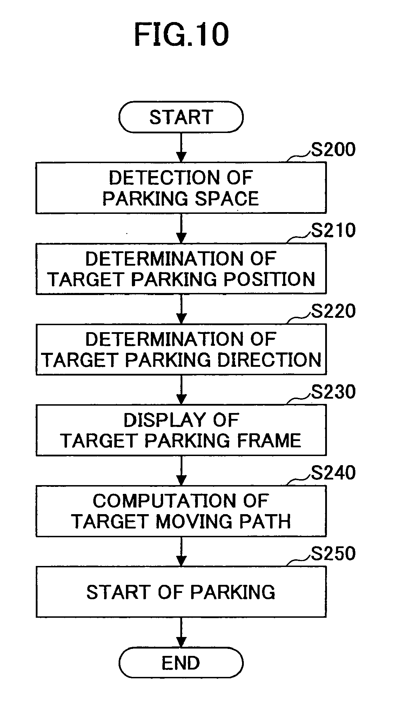

FIG. 9 is a block diagram showing the functional composition of the parking support ECU 12 of this embodiment. FIG. 10 is a flowchart for explaining the main routine of the processing performed by the parking support ECU 12 of this embodiment.

As shown in FIG. 9, the parking support ECU 12 comprises a parking space detecting part 42, a target parking position determining part 44, and a target moving path computing part 48.

As shown in FIG. 10, the parking space detecting part 42 detects a parking space as a space where the vehicle can be parked, based on the object information acquired by the neighboring object information acquisition device 80 in the process of reaching the parking start position as described above (step S200).

The target parking position determining part 44 determines a target parking position in the parking space detected by the parking space detecting part 42, based on the object information related to the endpoints of the object (obstacle) which forms the boundary of the parking space (step S210). Other factors, such as the maximum curvature of turning of the vehicle, may be taken into consideration in the determination of the target parking position.

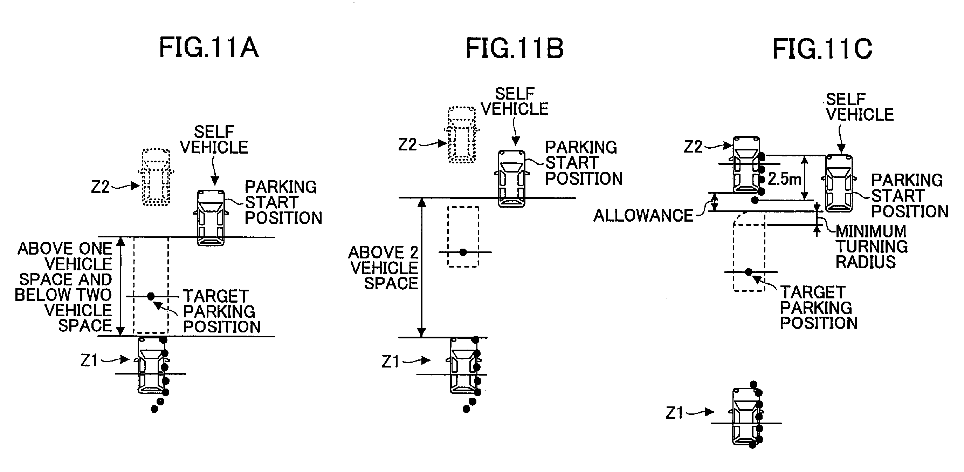

In the example of FIG. 11A, the target parking position determining part 44 determines a target parking position which is located almost in the middle of the parking space detected by the parking space detecting part 42. In this case, the target parking position may be determined on the basis of the endpoint of the front part of the vehicle Z1.

When a parking space which is above the two-vehicle space is detected on the front side of the vehicle Z1, the target parking position determining part 44 may determine a target parking position that is the position near any one of the sides of the parking space detected by the parking space detecting part 42 as in the example of FIG. 11B.

In this case, as shown in FIG. 11C, when another neighboring vehicle Z2 (which has the length of the sequence of points which is larger than 2.5m) is detected, a target parking position may be determined as being the position near the side of the vehicle Z2 by using the object information related to the vehicle Z2 (typically the endpoints of the rear of the vehicle Z2). At this time, a predetermined distance from the endpoint of the rear side of the vehicle Z2 may be left as the allowance for parking, so that the target parking position may be determined.

Further, the target parking position determining part 44 determines the target parking direction based on the object information (the information related to respective directions of the obstacle on the front, the rear, the left side and the right side of the target parking position) (step S220). The target parking direction helps the user move the vehicle in such appropriate direction to the target parking position.

In the actual system, the target parking position is managed as point coordinates that indicate the position where the center of the rear axis of the vehicle should be located in the parking space. However, in the following, suppose that the front, the rear, the left side and the right side of the target parking position mean the front, the rear, the left side and the right side of the vehicle concerned when the vehicle is placed at the target parking position.

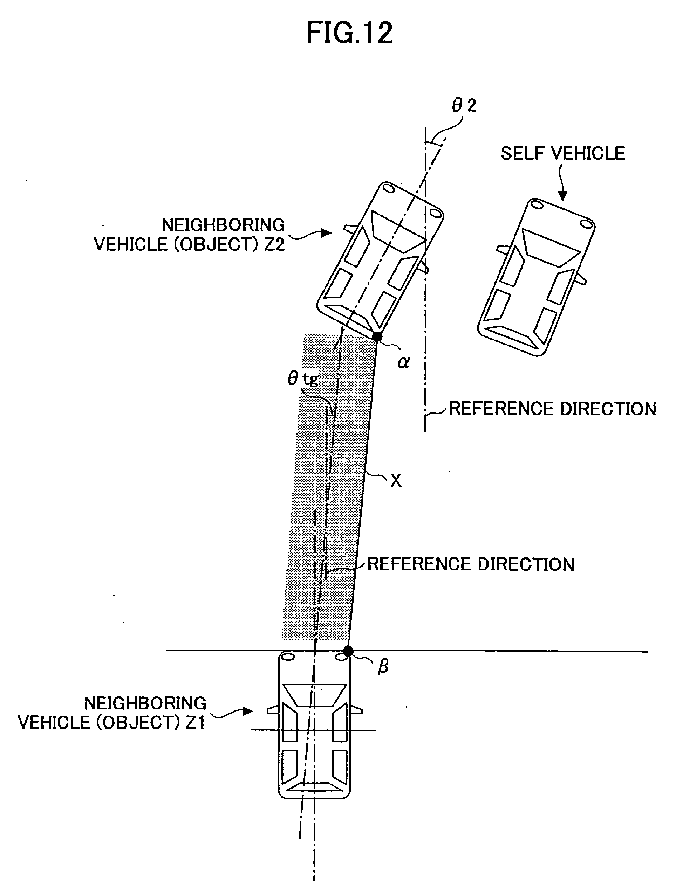

FIG. 12 is a diagram for explaining the method of determining a target parking direction in the case of parallel parking. In the example of FIG. 12, it is assumed that the self-vehicle is located in the parking start position and the obstacles are detected in the fore and aft directions of the target parking position.

In the example of FIG. 12, the 1st neighboring vehicle Z1 is parked at the angle θ 1 (in this example, = zero) to the reference direction, and the 2nd neighboring vehicle Z2 is parked along the inclination line at the angle θ 2 to the reference direction.

In this case, the angles θ1 and θ2 which indicate the directions of the obstacles (i.e. the direction of the vehicle Z1 and the direction of the vehicle Z2), which are derived based on the approximate curve or the like, are supplied from the neighboring object information acquisition device 80 to the target parking position determining part 44 as the object information.

In the example of FIG. 12, the target parking position determining part 44 determines the target parking direction θ tg in the range of an acute angle that is formed by the direction of the vehicle Z1 and the direction of the vehicle Z2. Namely, the target parking direction θ tg is determined so as to meet the conditions: 0 < θtg < θ3, under the situation where the inclination line of the vehicle Z2 is at the angle θ3 = θ2 - θ1 (where 0 < θ3 < 90) to the vehicle Z1.

It is preferred that the target parking direction θtg is determined as being the mean value in the range of the acute angle which is formed by the direction of the vehicle Z1 and the direction of the vehicle Z2. Specifically, in the above example, the target parking direction θtg is determined as θtg = θ3/2.

Or, as shown in FIG. 12, the target parking position determining part 44 may determine a target parking direction based on the object information (the information related to the endpoints α and β of the obstacles on the side of the target parking position, which exist before and behind the target parking position). Specifically, the target parking direction determined in this case is the direction of a straight line X which connects together the endpoints α and β of the obstacles.

When the information related to the directions of the obstacles is not acquired as the object information (namely, when it is detected at the step S110 that the length of the sequence of points is less than the predetermined value or when it is detected at the step S140 that the fitness ratio of the approximate curve or the approximate straight line is less than the predetermined reference value), the above-mentioned method of determination of the target parking direction may be adopted as an alternative method.

Alternatively, when the difference between the directions of the vehicles Z1 and Z2 or the difference between the directions of the two obstacles is adequately large, the target parking position determining part 44 may determine a target parking direction based on the direction of the straight line X as in the previous example. Conversely, when the difference between the directions of the two obstacles or the difference (83) between the directions of the vehicles Z1 and Z2 as in the previous example is adequately small, the target parking position determining part 44 may determine a target parking direction in the range of the acute angle formed by the two directions.

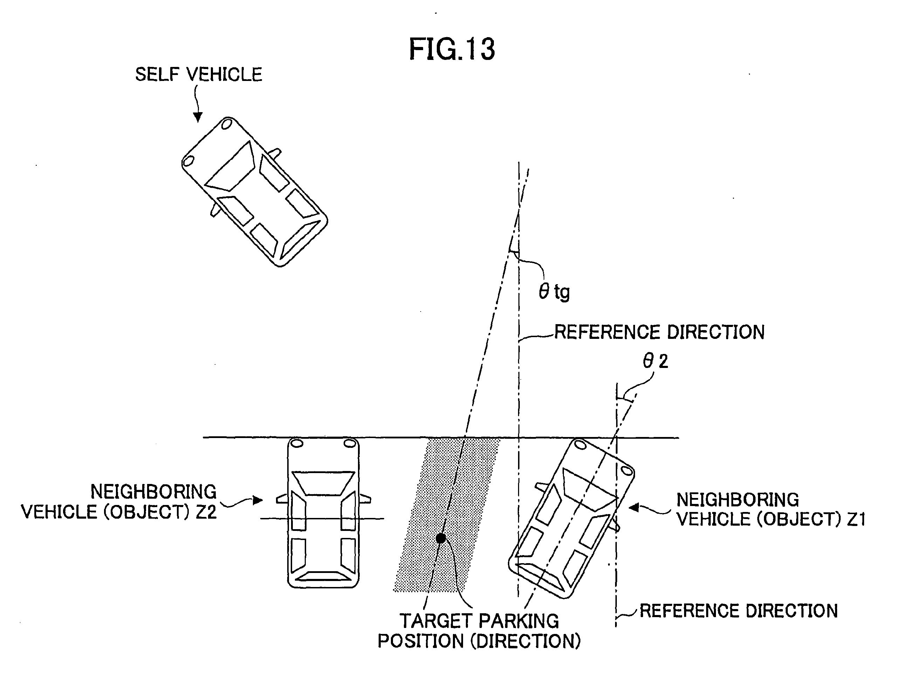

FIG. 13 is a diagram for explaining the method of determining a target parking direction in the case of garage parking.

Similar to the example of FIG. 12, also in the case of garage parking, the angles θ1 and θ2 which indicate the directions of the obstacles (i.e. the vehicles Z1 and Z2), which are derived based on the approximate curve etc., are supplied from the neighboring object information acquisition device 80 to the target parking position determining part 44 as the object information. And the target parking position determining part 44 determines the target parking direction based on this object information.

In the example of FIG. 13, the target parking position determining part 44 determines a target parking direction θtg in the range of an acute angle that is formed by the directions of the vehicles Z1 and Z2. Namely, the target parking direction θ tg is determined so as to meet the conditions: 0 < θtg < θ3, under the situation where the inclination line of the vehicle Z2 is at the angle θ3 = θ2 - θ1 (where 0 < θ3 < 90) to the vehicle Z1.

Similarly, it is preferred that the target parking direction θtg is determined as being the mean value in the range of the acute angle which is formed by the directions of the vehicles Z1 and Z2. Specifically, in the above example, the target parking direction θtg is determined as θtg = θ3/2.

As previously described, the target parking position and the target parking direction thus determined are displayed as the initial display position and direction of the target parking frame on the display 22 (step S230). For example, when the O.K. button is pressed by the user and the position and direction of the target parking frame (or the target parking position and the target parking direction) are fixed, the target moving path computing part 48 computes, based on the position of the target parking frame on the taken image, a target moving path (for example, the moving path of the center of the vehicle rear axis) for leading the vehicle to the position in the real space corresponding to the position of the target parking frame on the taken image (step S240). Moreover, in the step S240, the target moving path computing part 48 computes a target steering angle of the wheels which should be steered at each position on the target moving path.

In this manner, the parking support control is started (step S250). Then, the parking support ECU 12 estimates, during automatic guiding control, a vehicle position of the self-vehicle by using an amount of vehicle travel computed from the output signal of the vehicle speed sensor 18 and a steering angle position obtained from the output signal of the steering angle sensor 16. And the parking support ECU 12 computes a target steering angle in accordance with a deviation of the estimated vehicle position from the target moving path, and transmits the target steering angle concerned to the steering control ECU 30.

The steering control ECU 30 controls the motor 32 to attain the computed target steering angle. The motor 32 is disposed in the steering column of the vehicle and provided to rotate the steering shaft in accordance with the rotation angle.

Alternatively, the target moving path computing part 48 may be configured to compute an estimated vehicle position during the parking support control, based on the output signal of the steering angle sensor 16 and the output signal of the vehicle speed sensor 18, and compute a current target moving path in accordance with a deviation of the estimated vehicle position from the previously computed target moving path, so that a target steering angle in the estimated vehicle position may be determined based on the current target moving path concerned.

The computation of the target moving path may be carried out every time the vehicle is moved by a predetermined distance (for example, 0.5m). In order to leave the margin to perform such adjustment, a turning curvature (for example, a turning curvature up to 90% of the maximum turning curvature) which is slightly smaller than the maximum turning curvature of the vehicle may be used for determination of the initial target moving path.

In addition to computation of a target moving path in the parking start position, the target moving path computing part 48 may compute a target moving path during the vehicle movement until the parking start position is reached. Namely, the target moving path computing part 48 may be configured so that the target moving path computing part 48 outputs a command to instruct the driver to suspend the vehicle at a point where the target parking position and the target parking direction are determined by the target parking position determining part 44, the computation of a target moving path of the vehicle in the current vehicle position is already started and the computation of a subsequent target moving path is enabled.

Alternatively, the target moving path computing part 48 may be configured so that, when the target parking position and the target parking direction are determined by the target parking position determining part 44, the target moving path computing part 48 determines a parking start position where the computation of an appropriate target moving path is possible, so that the vehicle can be suitably moved to the parking start position concerned.

As described in the foregoing, according to the above embodiment, only the object information with high reliability is selected and used, and it is possible to determine the target parking position and the target parking direction finely with sufficiently high accuracy according to the position and direction of the obstacles in the neighborhood of the vehicle concerned. Therefore, the usefulness and reliability of the parking support control can improve.

The present invention is not limited to the above-described embodiments, and variations and modifications may be made without departing from the scope of the present invention.

For example, in the above-described embodiment, the edge of the object in the reference direction is simply considered as the endpoint of the object used for the determination of a target parking position. Alternatively, the above embodiment may be modified so that the point of the object nearest to the target moving path is considered as the endpoint of the object used for the determination of a target parking position. And when the obstacle is the vehicle, the above embodiment may be modified so that the point of the edge of the vehicle along the side surface of the vehicle is considered as the endpoint of the object used for the determination of a target parking position.

In addition, in the above-described embodiment, the corner sensor 70 is disposed on each of the right and left sides of the vehicle front part. Alternatively, the corner sensor 70 may be disposed on each of the right and left sides of the central part of the vehicle, and/or each of the right and left sides of the vehicle rear part additionally or by replacement.

In addition, in the above-mentioned embodiment, the target parking position and the target parking direction are determined based on the result of detection of the corner sensor 70. However, the target parking position may be determined by other factors, for example, a position in specific relative relation with a vehicle position when the parking switch 52 is turned ON, an estimated position based on the past parking records, and an estimated position based on the past movement records.

In the above-described embodiment, it is supposed that the obstacle is the vehicle for the sake of convenience of description. However, the obstacle may be any other entity, such as a bicycle, a two-wheeled vehicle, a wall, two or more pylons, etc.

Further, the present application is based upon and claims the benefit of priority from Japanese patent application No. 2005-002967, filed on January 7, 2005, the entire contents of which are incorporated herein by reference.

## Claims

1. A neighboring object information acquisition device provided in an automotive vehicle to acquire object information of a neighboring object of the vehicle, comprising:
a distance measuring unit measuring a quantity equivalent to a distance to the object in a predetermined direction;
a storage unit storing a sequence of points indicating results of the measurement performed by the distance measuring unit multiple times;
an object detection unit detecting existence of the object based on the sequence of points stored in the storage unit;
an approximation unit outputting an approximation of the sequence of points stored in the storage unit by applying a curve or a straight line, so that an approximate curve or an approximate straight line is derived from the sequence of points;
an evaluation unit outputting a result of evaluation of a reliability of the sequence of points; and
a determination unit determining the object information by selecting one of information derived from the sequence of points and information derived from the approximate curve or the approximate straight line in accordance with the result of evaluation from the evaluation unit.

2. The neighboring object information acquisition device as claimed in claim 1 wherein, when the result of evaluation from the evaluation unit indicates that a length of the sequence of points is above a reference value, the determination unit determines the information derived from the approximate curve or the approximate straight line as being the object information.

3. The neighboring object information acquisition device as claimed in claim 1 wherein the result of evaluation is a degree of variation of a distance of the approximate curve or the approximate straight line to a predetermined standard curve, and when the degree of variation is above a predetermined reference value, the determination unit determines the information derived from the approximate curve or the approximate straight line as being the object information.

4. The neighboring object information acquisition device as claimed in any of claims 1 to 3 wherein, when both the approximate curve and the approximate straight line are derived by the approximation unit, the result of approximation of the sequence of points with a larger one of a fitness ratio is adopted as the approximation result from which the object information is generated.

5. The neighboring object information acquisition device as claimed in any of claims 1 to 3 wherein the approximation unit is configured to determine which of the approximate curve or the approximate straight line is selected to obtain the approximation result, in accordance with a bending angle between two straight lines one of which is formed by connecting one end of the sequence of points and a middle point of the sequence of points while the other of the two straight lines is formed by connecting the other end of the sequence of points and the middle point thereof.

6. The neighboring object information acquisition device as claimed in any of claims 1 to 5 wherein the object information includes information related to endpoints of the object derived from the approximate curve or the approximate straight line.

7. A parking support device which supports parking of an automotive vehicle in which the neighboring object information acquisition device as claimed in any of claims 1 to 6 is provided,
wherein the parking support device determines a target parking position or a target parking direction which is a direction of the vehicle at the target parking position, based on the object information acquired by the neighboring object information acquisition device.
